# EUROPÄISCHE PATENTSCHRIFT

(11) **EP 0 484 933 B1**
(45) Veröffentlichungstag und Bekanntmachung des Hinweises auf die Patenterteilung: **03.08.1994**
(21) Anmeldenummer: 91118950.4
(22) Anmeldetag: 07.11.1991
(51) Int. Cl.: A22C 17/12

(54) **Abschwartmaschine**
De-rinding machine
Machine à découenner

(30) Priorität: 09.11.1990 DE 4035641
(43) Veröffentlichungstag der Anmeldung: 13.05.1992
(73) Patentinhaber: Maja-Maschinenfabrik Hermann Schill GmbH, 77694 Kehl (DE)
(72) Erfinder: Schill, Hermann, W-7640 Kehl (DE)
(74) Vertreter: Schmitt, Hans, Dipl.-Ing.

(56) Entgegenhaltungen:
- EP-A- 0 270 712
- DE-A- 2 408 766
- DE-C- 687 585
- FR-A- 2 517 932
- GB-A- 1 268 893
- US-A- 4 189 806

## Beschreibung

Die Erfindung bezieht sich auf eine Abschwartmaschine gemäß dem Oberbegriff des Anspruches 1.

Bei der Bearbeitung von Kamm- oder Kotelettstücken werden diese zunächst in ein Schwartenstück und ein Fleischstück zerlegt. Nach dem Durchtrennvorgang liegen diese beiden Stücke "sandwichartig" aufeinander.
Die Trennmaschine ist so eingestellt, daß an dem Fleischstück nur eine sehr dünne Fettschicht verbleibt und dementsprechend befindet sich die gesamte übrige Fettschicht am Schwartenstück.
Das Schwartenstück muß anschließend noch einem Entschwartungsvorgang zugeführt werden. Dazu ist es bisher erforderlich, daß von einer Bedienperson das in der Regel oben aufliegende Kotelett-Fleischstück abgenommen und aufgehängt wird, während von einer zweiten Bedienperson das Schwartenstück von Hand einer Abschwartmaschine zugeführt wird. Es sind somit in aufwendiger Weise für die Weiterverarbeitung des Kotelettstückes zwei Personen erforderlich. Außerdem ist die Unterbrechung des sonst maschinellen Arbeitsablaufes insbesondere für eine Serienbearbeitung nachteilig.

Man hat auch schon Versuche durchgeführt, wobei das zweiteilige, sandwichartige Kotelettstück direkt einer herkömmlichen Abschwartmaschine zugeführt wurde. Es hat sich hierbei jedoch gezeigt, daß die aufeinanderliegenden Stücke häufig beim Zuführen und auch beim Anschnitt realtiv zueinander verschoben werden, was eine schlechte Abschwartung zur Folge hatte. Auch besteht hierbei die Gefahr, daß sich das Anschnittende beim Zuführen über die Schneidkante des Abschwartmessers schiebt und dann ein Abschwarten nicht mehr möglich ist.

Aus der EP-A-0 270 712 ist eine Abschwartmaschine der eingangs erwähnten Art bekannt, bei der als Niederhalte- und Antriebseinrichtung ein oberhalb des Abschwartmessers angeordnetes Andruckband vorgesehen ist. Dies bewirkt, daß das Abschwartgut relativ zum Abschwartmesser richtig positioniert wird und transportiert das Abschwartgut nach dem Abschwartmesser zu einem Abtransportband.
Ebenso wie die herkömmlichen Abschwartmaschinen mit Andruckwalze ist diese Maschine zum Abschwarten von sandwichartig übereinander liegenden Koteletteilen nicht gut geeignet, da sich auch bei dieser Andruckeinrichtung im Bereich der hinteren, zuführseitigen Umlenkung beim Anlaufen der übereinder liegenden Koteletteile unerwünschte Längsverschiebungen der Koteletteile relativ zueinander einstellen können.

Aufgabe der vorliegenden Erfindung ist es, eine Maschine der eingangs erwähnten Art zu schaffen, die direkt eine maschinelle Weiterverarbeitung von durchtrennten Kotelettstücken ermöglicht, wobei die Kotelett-Teile - Fleischstück und Schwartenstück - aufeinanderliegend zugeführt werden können und das Speck- beziehungsweise Schwartenstück in erwünschter Weise sicher dem Abschwartmesser zugeführt wird.

Die Lösung dieser Aufgabe ist im Kennzeichnungsteil des Hauptanspruches wiedergegeben.

Diese Ausbildung der Andrückvorrichtung ermöglicht zunächst bei angehobenem Eintrittsende des Andruckbandes, daß die aufeinanderliegenden Kotelett-Teile ohne Verschiebebeaufschlagung unter das Andruckband gelangen können und somit in erwünschter Weise ihre Relativlage beibehalten. Bei abgesenktem Eintrittsende wird dann das "Sandwich"-Kotelettstück vergleichsweise großflächig in Richtung seiner Unterlage beaufschlagt und niedergehalten, so daß das vordere Ende des Kotelettstückes dem Abschwartmesser und der dort befindlichen Zugwalze für einen sauberen Anschnitt zugeführt wird.
Das Eintritts- oder Einlaufende des Andruckbandes kann dabei mit Hilfe des Hubantriebes bei einem ankommenden Kotelettstück jeweils angehoben und anschließend abgesenkt werden. Die Steuerung in Verbindung mit dem beim Durchlaufkanal zwischen Andruckband und Auflage für das Abschwartgut angeordneten Sensor sorgt für ein automatisches Anheben und Absenken der hinteren Bandumlenkung. Dabei befindet sich das Einlaufende in Ausgangslage in angehobenem Zustand und beim Passieren des vorderen Endes des Kotelettstückes bei dem Sensor erfolgt das Absenken in Andrückstellung. Somit ist ein automatischer Betrieb ohne manuelle Bedienung möglich.

Zweckmäßigerweise ist die Andrückeinrichtung etwa zur Zuführebene beziehungsweise zum Transportband hin federbeaufschlagt. Das Andruckband kann sich so praktisch selbsttätig auf unterschiedliche Dicken von Kotelettstücken einstellen und die Federbeaufschlagung sorgt gleichzeitig für den notwendigen Niederhaltedruck.

Eine Ausführungsform sieht vor, daß das Andruckband einen Form-Stützkörper aufweist, der aus einer Reihe von quer zur Transportrichtung verlaufenden Formstangen besteht, die an ihren Enden vorzugsweise paarweise in Haltelaschen befestigt und durch Verbindungslaschen gelenkig miteinander verbunden sind.

Ein solches Stangengitterband errmöglicht eine formangepaßte, flächige Beaufschlagung des Kotelettstückes und hat auch die erforderliche Steifigkeit um die vorgesehenen Andruck- oder Niederhaltekräfte zu übertragen.

Zweckmäßigerweise sind zumindest die vordere Umlenkung des Andruckbandes, gegebenenfalls beide Umlenkungen als Formwalzen ausgebildet, deren Außenkontur dem Andruckband beziehungsweise den Formstangen angepaßt ist.
Durch die Einbuchtungen der einzelnen Formstangen verringern sich während des Umlaufes bei den Umlenkungen deren Abstände voneinander, so daß hindurchragende, aus dem Kotelettstück herausragende Knochen gegebenenfalls festgeklemmt werden können und das Kotelettstück dann unter Umständen über das Abschwartmesser hinweggehoben wird. Dies würde zu entsprechenden Betriebsstörungen führen. Durch den beziehungsweise die Formwalzen oder entsprechenden Füllkörper wird nun ein Hindurchgreifen von Knochenteilen durch die Zwischenräume zwischen den Formstangen und damit ein Festklemmen vermieden.

Eine andere Ausführungsform sieht vor, daß der aus Formstangen bestehende Form-Stützkörper eine äußere, elastische Umhüllung aufweist. Auch hierdurch kann ein Eingreifen von Knochenteilen zwischen die Formstangen in den Umlenkbereichen vermieden werden.

Zusätzliche Ausgestaltungen der Erfindung sind in den weiteren Unteransprüchen aufgeführt.
Nachstehend ist die Erfindung mit ihren wesentlichen Einzelheiten anhand der Zeichnungen noch näher erläutert.

Es zeigt:
- **Fig. 1**: eine Teilseitenansicht einer Abschwartmaschine mit Andruckeinrichtung,
- **Fig. 2**: eine zum Teil im Schnitt gehaltene Vorderseitenansicht im Bereich der Andruckeinrichtung,
- **Fig. 3**: eine Aufsicht der Andruckeinrichtung und
- **Fig. 4**: eine Seitenansicht eines Andruckbandes.

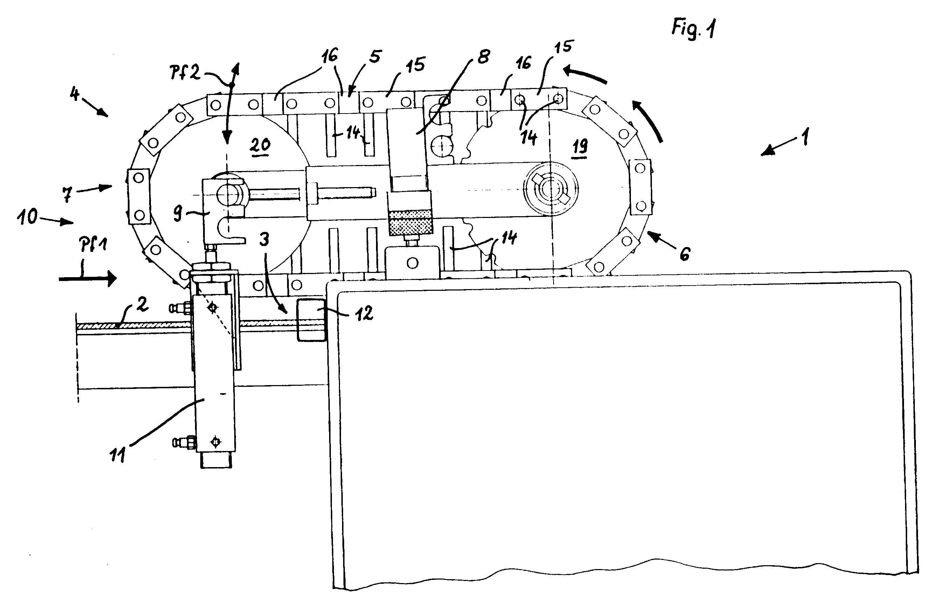

Eine in Figur 1 gezeigte Abschwartmaschine 1 dient zum Bearbeiten von Kotelettstücken. Sie weist, wie bisherige Abschwartmaschinen auch, eine hier nicht dargestellte Zugwalze zum Transportieren des Abschwartgutes gegen ein Abschwartmesser auf. Zum Zuführen des Abschwartgutes dient ein Zuführ-Transportband 2, an dessen Abgabeende sich die Zugwalze und etwas mit dessen Schneidkante darüberstehend das Abschwartmesser anschließen.

Oberhalb mit Abstand des Zuführendbereiches 3 des Transportbandes 2 befindet sich eine Andrückeinrichtung 4.
Mit Hilfe dieser Andrückeinrichtung 4 können auf dem Transportband 2 zugeführte Kotelett-Teile, die aus einem übereinanderliegenden Fleischstück und einem darunter befindlichen Schwartenstück bestehen, flächig beaufschlagt werden, so daß das unten liegende Schwartenstück sicher dem Abschwartvorgang, insbesondere der Zugwalze und dem Abschwartmesser zugeführt werden.

Die Andrückeinrichtung 4 weist ein Andruckband 5 auf, welches um zwei Umlenkungen 6 und 7 geführt ist. Die in Zuführrichtung (Pfeil Pf1) vordere Umlenkung 6 befindet sich etwa oberhalb der Schneidkante des Abschwartmessers beziehungsweise auch der dort befindlichen Zugwalze.
Die hintere Umlenkung 7 befindet sich mit Abstand vor dieser vorderen Umlenkung 6.

Die Andrückeinrichtung 4 ist mit Hilfe von Federn 8 zu dem darunter befindlichen Transportband 2 hin druckbeaufschlagt. Der freie Abstand zwischen dem unteren Trum des Andruckbandes 5 und dem Transportband 2 kann sich so auf die Dicke des jeweiligen Kotelettstückes selbsttätig einstellen. Zusätzlich besteht auch noch die Möglichkeit, die vordere Umlenkung 6 und auch die hintere Umlenkung 7 in ihrer Höhenlage zu verändern. In Figur 1 ist dazu erkennbar, daß die Achse der hintere Umlenkung 7 in unterschiedlich hohe Aufnahmegabeln 9 einsetzbar ist.

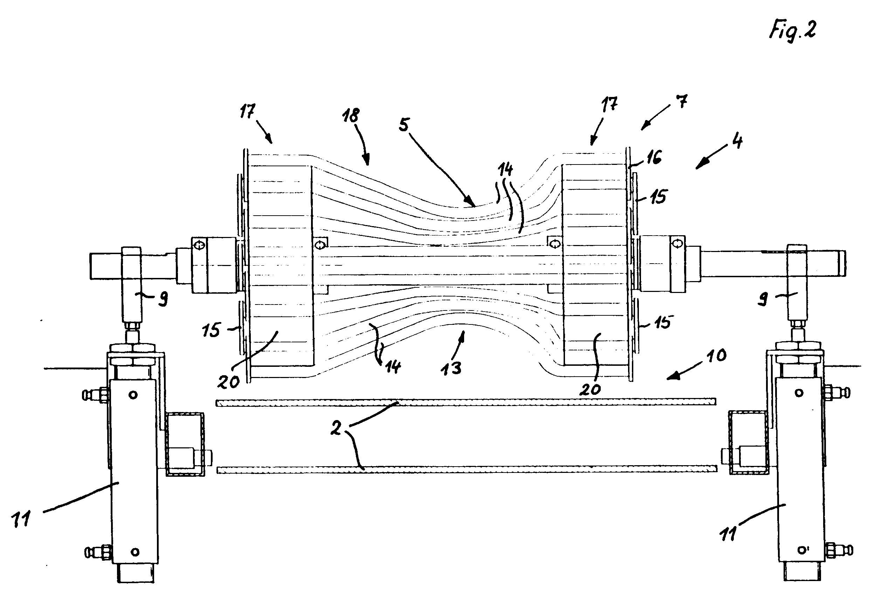

Weiterhin ist vorgesehen, daß das Andruckband mit seinem einlaufseitigen Ende 1o in eine Einlaufstellung anhebbar und bei darunter befindlichem Kotelettstück oder dergleichen in eine Druckstellung absenkbar ist, wie dies durch den Doppelpfeil Pf2 angedeutet ist.
Dadurch gelangt das auf dem Transportband 2 zugeförderte Kotelettstück oder dergleichen praktisch stirnseitig stoßfrei unter die Andrückeinrichtung 4 so daß ein Verschieben von dem Schwartenstück und dem Lose darauf liegenden Fleischstück vermieden wird. Zum Anheben und Absenken des Einlaufendes 1o ist ein Hubantrieb vorgesehen, der im Ausführungbeispiel durch beidseitig der hinteren Umlenkung 7 angeordnete Druckluftzylinder 11 realisiert ist, wie dies gut in Figur 2 erkennbar ist. Die Aufnahmegabeln 9 für die Achsstummel der hinteren Umlenkung 7 sind mit diesen Druckluftzylindern 11 verbunden (Figur 1).

In Ausgangsstellung befindet sich das Einlaufende 1o in etwas angehobener Lage, so daß der Abstand zwischen dem Zuführ-Transportband 2 und dem Andruckband 5 bei der hinteren Umlenkung 7 etwas größer als die Höhe des ankommenden Kotelettstückes ist.

Die Druckluftzylinder 11 sind über eine Steuerungseinrichtung mit einem Sensor, insbesondere einer Lichtschranke 12 verbunden. Mit Hilfe dieser Lichtschranke 12 wird erfaßt, wenn sich das vordere Ende des Kotelettstückes an ihr vorbeibewegt. Die Lichtschranke kann etwa mittig der Längserstreckung des Andruckbandes 5 angeordnet sein, so daß das Kotelettstück beim Absenken des Einlaufendes 1o des Andruckbandes 5 vergleichsweise großflächig beaufschlagt wird. Die Beaufschlagung erfolgt dabei von oben, so daß praktisch keine Längsverschiebekräfte auftreten, so daß das auf dem Schwartenstück liegende Fleischstück nicht verschoben wird. Das Kotelettstück wird dann bei abgesenktem Andruckband 5 der Zugwalze und dem Abschwartmesser zugeführt und dabei praktisch ganzflächig niedergehalten. Dadurch wird ein sicherer Anschnitt und auch ein gutes Abschwarten des Schwartenstückes erreicht. Nach dem Abschwartvorgang kann das Fleischstück nach oben abgenommen werden und die Schwarte und der abgeschwartete Speck können getrennt entsprechenden Aufnahmebehältern zugeführt werden.

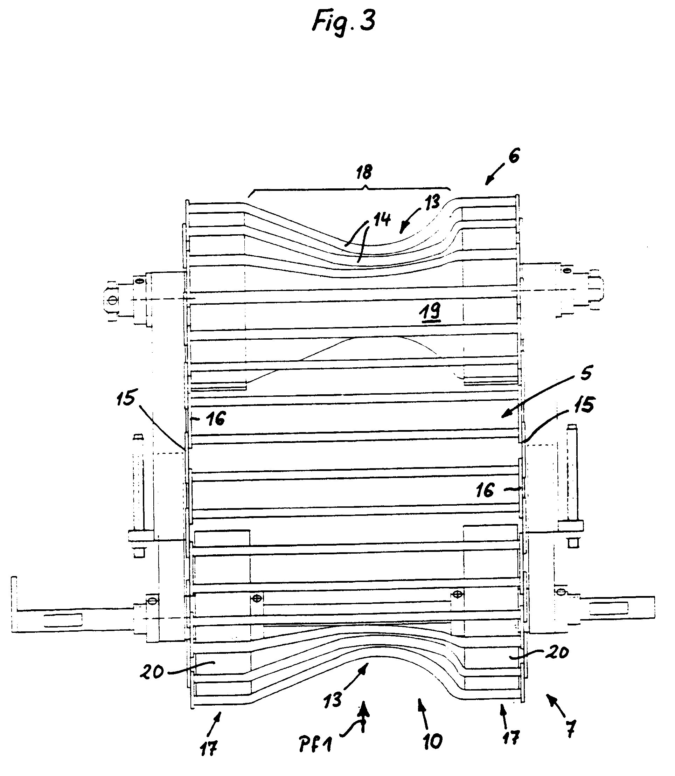

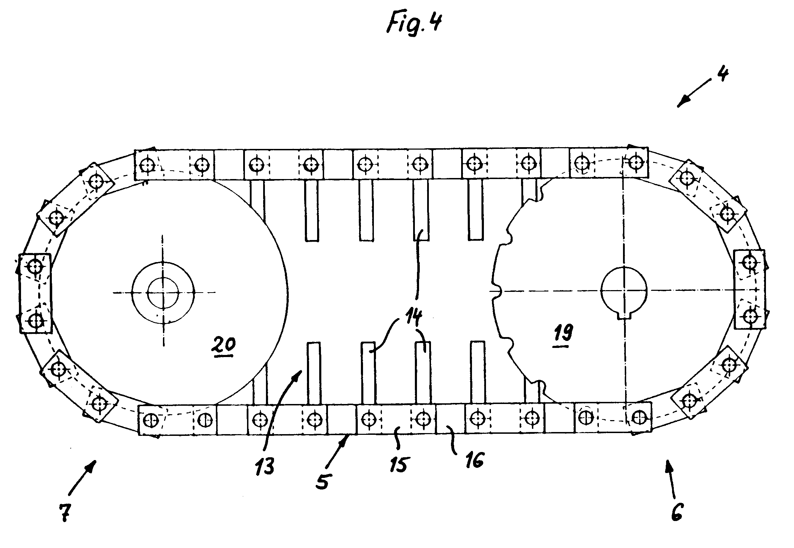

Insbesondere in den Figuren 2 und 3 ist erkennbar, daß das Andruckband 5 als Formband mit einer Einwölbung 13 ausgebildet ist. Diese Einwölbung 13 quer zur Transportrichtung ist etwa an die Querschnittsform eines Kotelettstückes angepaßt, so daß dieses nicht nur in Längsrichtung durch das Andruckband 5 sondern auch in Querrichtung weitgehend flächig druckbeaufschlagt und damit niedergehalten werden kann. Erwähnt sei in diesem Zusammenhang auch, daß durch diese großflächige Beaufschlagung vergleichsweise kleine Beaufschlagungskräfte für ein ordnungsgemäßes Zuführen des Kotelettstückes genügen. Dadurch wird das Fleischstück auch geschont.
Im Ausführungsbeispiel hat das Andruckband 5 einen durch eine Reihe von Formstangen 14 gebildeten Stützkörper. Diese Formstangen 14 sind paarweise mit ihren Enden jeweils mit Haltelaschen 15 fest verbunden. Die einzelnen Doppelstangen-Glieder sind durch Verbindungslaschen 16 gelenkig miteinander verbunden (vgl. Fig. 2 bis 4).

Die Formstangen 14 weisen äußere, vorzugsweise etwa achsparallele Auflagebereiche 17 zur Auflage auf den Umlenkungen 6 und 7 und dazwischen einen an die Kontur eines Kotelettstückes oder dergleichen angepaßten Formabschnitt 18 mit der Einwölbung 13 auf.
Bedingt durch diese Formgebung der Formstangen 14 ergibt sich in den Umlenkbereichen bei den Umlenkungen 6 und 7 eine Abstandverringerung benachbarter Formstangenglieder im Bereich ihrer Einwölbung 13. Um ein Festklemmen des Abschwartgutes insbesondere bei der vorderen Umlenkung 6 zu vermeiden, kann der durch die Stangenglieder gebildete Form-Stützkörper mit einer äußeren, elastischen Umhüllung, beispielsweise aus einem Gummiband bestehend versehen sein. Dadurch wird ein Eindringen insbesondere auch von aus den Kotelettstücken vorstehenden Knochenstücken zwischen die Formstangen 14 vermieden.

Im Ausführungsbeispiel ist eine andere Möglichkeit gezeigt, um ein Eindringen von aus dem Kotelettstück oder dergleichen vorstehenden Knochen zwischen die Formstangen 14 zu vermeiden. Dazu weist die vordere Umlenkung 6 eine Formwalze 19 auf, deren Außenkontur dem Andruckband 5 beziehungsweise dessen Formstangen 14 angepaßt ist. Dadurch können Kotelett-Knochenstücke die Formstangen-Zwischenräume nicht durchgreifen, so daß sie dementsprechend auch nicht insbesondere bei der vorderen Umlenkung 6 festgeklemmt werden.

Wie gut in Figur 3 erkennbar, ist die vorerwähnte Formwalze 19 hier bei der vorderen Umlenkung 6 vorgesehen, während die hintere Umlenkung 7 durch zwei äußere Umlenkräder 2o gebildet ist, die in ihrer axialen Breite so bemessen sind, daß sie den Auflagebereich 17 der Formstangen 14 unterstützen. Auch hier könnte gegebenenfalls eine Formwalze 19 vorgesehen sein. Die bereits vorerwähnte, elastische Umhüllung des Andruckbandes kann sowohl bei Umlenkungen mit Umlenkräder 2o als auch bei Umlenkungen mit Formwalzen 19 in Kombination vorgesehen sein.

Das Zufördern des Abschwartgutes beziehungsweise der sandwichartig aufeinanderliegenden Kotelettstücke zum Abschwartmesser erfolgt mit dem Zuführ-Transportband 2. Durch die besondere Ausbildung der Andrückeinrichtung 4 und dabei insbesondere durch die Maßnahme, daß das einlaufseitige Ende 1o des Andruckbandes 5 in Einlaufstellung angehoben ist, kommt man bei der Andruckeinrichtung 4 auch ohne eigenen Antrieb aus. Das Abschwartgut gelangt nämlich zunächst praktisch ohne Berührung des Andruckbandes 5 unter dieses und beim Absenken des Einlaufendes 1o erfolgt dann gleichzeitig eine Druckbeaufschlagung, die auch bei zusätzlich einwirkenden Mitnahmekräften für das Andruckband 5 ein Verschieben der Kotelettstücke relativ zueinander verhindert.
Es besteht aber ohne Weiteres auch die Möglichkeit einen Antrieb für das Andruckband 5 vorzusehen, durch den dann das Andruckband 5 und das Transportband 7 synchron in Förderrichtung laufen. Das Andruckband 5 kann dabei entweder kontinuierlich durchlaufen oder aber beim Ansprechen der Lichtschranke 12 anlaufen.

Die in Figur 1 dargestellte Abschwartmaschine 1 kann direkt im Anschluß an eine Kotelett-Trennmaschine angeschlossen sein, von der in ein Schwartenstück und ein Fleichsstück durchtrennte Kotelettstücke zugeliefert werden. Dadurch ist praktisch unterbrechungslos eine maschinelle Bearbeitung von Kotelettstücken möglich.

Alle in der Beschreibung, den Ansprüchen und der Zeichnung dargestellten Merkmale können sowohl einzeln als auch in beliebiger Kombination miteinander erfindungswesentlich sein.

## Patentansprüche

1. Abschwartmaschine mit einem Abschwartmesser und einer bei diesem angeordneten Zugwalze zum Transportieren des Abschwartgutes gegen das Abschwartmesser sowie einem Zuführtisch vorzugsweise mit einem Transportband und mit einer oberhalb der Zuführebene angeordneten Andruckeinrichtung (4) für das Abschwartgut, insbesondere zum Bearbeiten von Kotelettstücken, wobei die Andruckeinrichtung (4) oberhalb des Abschwartmessers ein Andruckband (5) mit einer vom Abschwarfmesser gesehenen, hinteren Umlenkung (7) sowie einer mit Abstand in Transportrichtung befindlichen vorderen Umlenkung (6) aufweist, **dadurch** **gekennzeichnet,** daß die vordere Umlenkung (6) etwa oberhalb der Schneidkante des Abschwartmessers angeordnet ist, daß die hintere Umlenkung (7) relativ zum darunter befindlichen Transportband (2) oder dergleichen in eine Einlaufstellung anhebbar und in eine Druckstellung absenkbar ist, das zum Anheben und Absenken der hinteren Umlenkung (7) ein Hubantrieb vorgesehen ist, der mit einer Steuerung verbunden ist, die einen beim Durchlaufkanal zwischen Andruckband und Auflage (2) für das Abschwartgut angeordneten Sensor aufweist, der etwa mittig der Längserstreckung des Andruckbandes angeordnet ist.

2. Maschine nach Anspruch 1, dadurch gekennzeichnet, daß als Hubantrieb zum Anheben und Absenken der hinteren Umlenkung (7) vorzugsweise beidseitig der Umlenkung (7) angeordnete Druckluftzylinder (11) vorgesehen sind.

3. Maschine nach Anspruch 1 oder 2, dadurch gekennzeichnet, daß als Sensor eine Lichtschranke (12) vorgesehen ist.

4. Maschine nach einem der Ansprüche 1 bis 3, dadurch gekennzeichnet, daß die Andruckeinrichtung (4) etwa zur Zuführebene beziehungsweise zum Transportband hin federbeaufschlagt ist.

5. Maschine nach einem der Ansprüche 1 bis 4, dadurch gekennzeichnet, daß das Andruckband (5) als Formband mit einer Einwölbung ausgebildet ist und quer zur Transportrichtung etwa an die Querschnittsform eines Kotelettstückes oder dergleichen angepaßt ist.

6. Maschine nach einem der Ansprüche 1 bis 5, dadurch gekennzeichnet, daß das Andruckband (5) einen Form-Stützkörper aufweist, der aus einer Reihe von quer zur Transportrichtung verlaufenden Formstangen (14) besteht, die an ihren Enden vorzugsweise paarweise in Haltelaschen (15) befestigt und durch Verbindunglaschen (16) gelenkig miteinander verbunden sind.

7. Maschine nach Anspruch 6, dadurch gekennzeichnet, daß die Formstangen (14) äußere Auflagebereiche (17) zur Auflage auf den Umlenkungen (6, 7) und dazwischen einen an den Kontur, insbesondere eines Kotelettstückes angepaßten Formabschnitt (18) aufweisen.

8. Maschine nach einem der Anspüche 1 bis 7, dadurch gekennzeichnet, daß zumindest die vordere Umlenkung (6) des Andruckbandes, gegebenenfalls beide Umlenkungen (6, 7) als Formwalzen (19) ausgebildet sind, deren Außenkontur dem Andruckband beziehungsweise den Formstangen (14) angepaßt ist.

9. Maschine nach einem der Ansprüche 1 bis 8, dadurch gekennzeichnet, daß der Form-Stützkörper des Andruckbandes (5) eine äußere, elastische Umhüllung aufweist.

10. Maschine nach einem der Ansprüche 1 bis 9, dadurch gekennzeichnet, daß der Abstand des Andruckbandes (5) von der Auflage (2) für das Abschwartgut verstellbar ist.

11. Maschine nach eienm der Ansprüche 1 bis 1o, dadurch gekennzeichnet, daß das bei dem Zuführtisch vorgesehene Transportband (2) angetrieben ist und daß Andruckband (5) freilaufend ausgebildet ist.

12. Maschine nach einem der Ansprüche 1 bis 1o, dadurch gekennzeichnet, daß das Transportband (2) und/oder das Andruckband (5) angetrieben sind und daß bei separaten Antrieben für das Transportband (2) und das Andrückband (5) etwa synchrone Fördergeschwindigkeiten vorgesehen sind.

13. Maschine nach einem der Ansprüche 1 bis 12, dadurch gekennzeichnet, daß sie mit ihrem Zuführ-Transportband (2) oder dergleichen direkt an den Ausgang einer Kotelett-Trennmaschine angeschlossen ist.

## Claims

1. A de-rinding machine including a de-rinding knife and a feed roll which is arranged next to said de-rinding knife and serves to convey the material to be de-rinded towards the de-rinding knife, as well as a feed table preferably having a conveyor belt and arranged above the feed plane a pressing means (4) for the material to be de-rinded, particularly for processing racks of meat, wherein the pressing means (4) has above the de-rinding knife a pressing belt (5) with a rear turn (7) viewed from the de-rinding knife and a spaced front turn (6) in the direction of conveyance, **characterized in** **that** the front turn (6) is arranged approximately above the cutting edge of the de-rinding knife, that the rear turn (7) is adapted to be lifted relative to the subjacent conveyor belt (2) or the like to assume an intake position and is adapted to be lowered to assume a pressure position, that for lifting and lowering the rear turn (7) an elevating drive is provided connected to a control having a sensor which is arranged in the passage between pressing belt and support (2) for the material to be de-rinded, approximately mid-way of the longitudinal expanse of the pressing belt.

2. A machine as claimed in claim 1, characterized in that the elevating drive for lifting and lowering the rear turn (7) is preferably provided in the form of compressed-air cylinders (11) arranged on both sides of the turn (7).

3. A machine as claimed in claim 1 or claim 2, characterized in that a light barrier (12) is provided as the sensor.

4. A machine as claimed in any one of claims 1 to 3, characterized in that the pressing means is spring biassed approximately towards the feed plane and conveyor belt.

5. A machine as claimed in any one of claims 1 to 4, characterized in that the pressing belt (5) takes the form of a shaped belt with a concavity and transversely of the conveying direction is approximately adapted to the cross-sectional shape of a rack or the like of meat.

6. A machine as claimed in any one of claims 1 to 5, characterized in that the pressing belt (5) has a shaped support body consisting of a series of shaped bars (14) running transversely of the conveying direction, said bars being fitted at their ends, preferably in pairs, in holding plates (15) and being flexibly interconnected by connecting plates (16).

7. A machine as claimed in claim 6, characterized in that the shaped bars (14) have outer bearing areas (17) for resting on the turns (6,7) and inbetween a shaped portion (18) adapted to the contour particularly of a rack of meat.

8. A machine as claimed in any one of claims 1 to 7, characterized in that at least the front turn (6) of the pressing belt, possibly both turns (6,7), take the form of contoured rolls (19), the outer contour thereof being adapted to the pressing belt and shaped bars (14).

9. A machine as claimed in any one of claims 1 to 8, characterized in that the shaped supporting body of the pressing belt (5) has an outer elastic cover.

10. A machine as claimed in any one of claims 1 to 9, characterized in that the distance of the pressing belt (5) from the support (2) for the material to be de-rinded is adjustable.

11. A machine as claimed in any one of claims 1 to 10, characterized in that the conveyor belt (2) provided at the feed table is driven and that the pressing belt (5) is free-running.

12. A machine as claimed in any one of claims 1 to 10, characterized in that the conveyor belt (2) and/or the pressing belt (5) are driven and that in the case of separate drives for the conveyor belt (2) and the pressing belt (5) approximately synchronous conveying speeds are provided.

13. A machine as claimed in any one of claims 1 to 12, characterized by being connected with its feeding conveyor belt (2) or the like directly to the delivery end of a machine for cutting off racks of meat.

## Revendications

1. Découenneuse comprenant un couteau de découennage et un rouleau d'entraînement placé près de celui-ci pour transporter la matière à découenner vers le couteau de découennage, ainsi qu'une table d'alimentation pourvue de préférence d'une bande transporteuse et d'un dispositif presseur (4) installé au-dessus du plan d'alimentation et servant à exercer une pression sur la matière à découenner, en particulier pour préparer des morceaux de côtes, le dispositif presseur (4) comportant, au-dessus du couteau de découennage, une bande de pressage (5) présentant un renvoi arrière (7), vu à partir du couteau de découennage, de même qu'un renvoi avant (6) situé à distance de lui dans la direction de transport, caractérisée en ce que le renvoi avant (6) est placé à peu près au-dessus du tranchant du couteau de découennage, que le renvoi arrière (7) est relevable à une position d'entrée et abaissable à une position de pressage par rapport à la bande transporteuse (2) ou le dispositif analogue sous-jacent, et que, pour relever et abaisser le renvoi arrière (7), on a prévu une commande de montée/descente reliée à un système d'actionnement possédant un détecteur disposé à peu près au milieu de l'étendue longitudinale de la bande de pressage sur le canal de passage entre cette bande et le support (2) de la matière à découenner.

2. Machine selon la revendication 1, caractérisée en ce que la commande de montée/descente pour relever et abaisser le renvoi arrière (7) est formée de préférence de vérins pneumatiques (11) placés des deux côtés de ce renvoi (7).

3. Machine selon la revendication 1 ou 2, caractérisée en ce que le détecteur est un barrage photo-électrique (12).

4. Machine selon une des revendications 1 à 3, caractérisée en ce que le dispositif presseur (4) est chargé élastiquement, à peu près en direction du plan d'alimentation ou de la bande transporteuse.

5. Machine selon une des revendications 1 à 4, caractérisée en ce que la bande de pressage (5) est réalisée comme une bande de forme ou bande façonnée présentant une concavité et est adaptée à peu près, transversalement à la direction de transport, à la forme en section droite d'un morceau de côtes ou analogue.

6. Machine selon une des revendications 1 à 5, caractérisée en ce que la bande de pressage (5) comporte un corps d'appui de forme ou façonné, constitué d'une série de barres (14) façonnées orientées transversalement à la direction de transport, qui sont fixées à leurs extrémités, de préférence par paires, dans des plaques de maintien (15) et sont reliées de façon articulée entre elles par des plaques d'assemblage (16).

7. Machine selon la revendication 6, caractérisée en ce que les barres façonnées (14) comportent des parties extérieures d'appui (17) destinées à s'appuyer sur les renvois (6, 7) et, entre ces parties, un tronçon façonné (18) adapté au profil d'un morceau de côtes en particulier.

8. Machine selon une des revendications 1 à 7, caractérisée en ce qu'au moins le renvoi avant (6) de la bande de pressage, éventuellement les deux renvois (6, 7), sont réalisés comme des rouleaux de forme ou rouleaux façonnés (19) dont le profil extérieur est adapté à la bande de pressage respectivement aux barres façonnées (14).

9. Machine selon une des revendications 1 à 8, caractérisée en ce que le corps d'appui façonné de la bande de pressage (5) comporte une enveloppe extérieure élastique.

10. Machine selon une des revendications 1 à 9, caractérisée en ce que la distance de la bande de pressage (5) du support (2) pour la matière à découenner est réglable.

11. Machine selon une des revendications 1 à 10, caractérisée en ce que la bande transporteuse (2) prévue sur la table d'alimentation est commandée et que la bande de pressage (5) est réalisée pour pouvoir tourner librement.

12. Machine selon une des revendications 1 à 10, caractérisée en ce que la bande transporteuse (2) et/ou la bande de pressage (5) est ou sont commandée(s) et que, en cas de commandes séparées pour la bande transporteuse (2) et la bande de serrage (5), on prévoit des vitesses d'avancement à peu près synchrones.

13. Machine selon une des revendications 1 à 12, caractérisée en ce que sa bande transporteuse (2) d'alimentation ou son dispositif analogue est raccordé directement à la sortie d'une machine à sectionner les morceaux de côtes.
